# EUROPEAN PATENT APPLICATION

(11) **EP 4 679 082 A1**
(43) Date of publication of application: **14.01.2026**
(21) Application number: 24187881.8
(22) Date of filing: 10.07.2024
(51) Int. Cl.: G01N 30/02, G01N 30/72, B01D 15/32

(54) **METHOD FOR IMPROVED DETERMINATION OF THE ACYLCARNITINE PROFILE IN BIOLOGICAL MATERIAL**

(71) Applicant: Masdiag Sp. z o.o., 01-882 Warszawa (PL)
(72) Inventor: Pajdowska, Magdalena, 05-400 Otwock (PL); Kozlowski, Dariusz, 04-703 Warszawa (PL); Bienkowski, Tomasz, 00-175 Warszawa (PL); Kowalski, Konrad, 03-193 Warszawa (PL); Rogozinska, Ma gorzata, 03-126 Warszawa (PL); Cytrych, Inga, 06-100 Pultusk (PL); Halak, Renata, 00-849 Warszawa (PL)
(74) Representative: JD&P Patent Attorneys Joanna Dargiewicz & Partners

(57) **Abstract**

The present invention relates to a method for quantitative and qualitative determination of the acylcarnitine profile in a dried blood spot of children and/or adults using acylcarnitine standards to perform a standard curve using liquid chromatography coupled with electrospray ionisation mass spectrometry (LC-MS).

## Description

### Field of the invention

The present invention relates to a method for the improved determination of the acylcarnitine profile in biological material using liquid chromatography coupled to mass spectrometry (LC-MS) and to the use of such a method for the detection of metabolic disorders, and in particular, for the diagnosing and monitoring therapy for inborn errors of metabolism (IEM). The present method enables the description of the qualitative profile and the determination of the concentration of many acylcarnitines, including their isomers, in biological material collected from a patient. This translates into improved diagnosis and/or monitoring of metabolic disorders in adults and children.

### Background of the invention

Fatty acid oxidation in mitochondria is one of the most important metabolic pathways related to the energy system of the cell. The oxidation process takes place in the mitochondrial matrix, which forces the transport of fatty acids from the cytoplasm to the interior of the mitochondrion, where the enzymes that catalyse this reaction are located. Such transport is made possible by the presence of the so-called carnitine system (or carnitine shuttle). Biochemical disorders of this pathway constitute a large group of genetically inherited diseases (inborn errors of metabolism, IEM). Most of them are the result of damage to the gene encoding a specific enzyme responsible for the conversion of some compounds into others, resulting in the accumulation of excessive amounts of substrates that are toxic or harmful to the body, or the inability to produce a specific product necessary for the proper functioning of the body. IEM are revealed mainly in infancy or early childhood and can be diagnosed, among others, based on a semi-quantitative acylcarnitine profile analysed using flow injection mass spectrometry (FIA-MS/MS). This does not exclude the possibility of detecting IEM also in the adult population, which is not covered by FIA-MS/MS tests, or is not detected by this test due to its limitations (sensitivity, specificity, selectivity, specifity). Patients with IEM require regular monitoring of selected biochemical parameters (including acylcarnitine profile testing) to qualify for therapy and control its correctness in a possible combination with the applied diet. Homeostasis in IEM patients can be rapidly disrupted as a result of triggering factors such as infections or physical exertion, therefore regular monitoring of the acylcarnitine profile often enables for early and effective medical intervention.

IEM is a group of rare genetically inherited metabolic disorders. They are diagnosed and monitored using the acylcarnitine profile and include:
- organic acidurias (methylmalonic aciduria (MMA)), propionic aciduria (PA), 3-methylcrotonyl-Coenzyme A carboxylase deficiency (3MCC), isovaleric aciduria (IVA), glutaric aciduria type I (GA I), glutaric aciduria type II (GA II), methacrylic aciduria (HIBCH), 2-methyl-3-hydroxybutyric aciduria (MHBD),
- fatty acid oxidation disorders: medium-chain acyl-coenzyme A dehydrogenase deficiency (MCADD), Long-chain 3-hydroxyacyl-coenzyme A dehydrogenase deficiency (LCHADD), very long-chain acyl-CoA dehydrogenase deficiency (VLCADD), Multiple acyl-CoA dehydrogenation deficiency (MADD), carnitine palmitoyltransferase types I and II (CPT I and CPT II) deficiency, carnitine-acylcarnitine translocase (CACT) deficiency, carnitine uptake deficiency (CUD), 3-HMG-CoA lyase (HMG) deficiency, multiple carboxylase (MCD) deficiency, short-chain acyl-CoA dehydrogenase deficiency (SCADD), short/branched-chain acyl-CoA dehydrogenase deficiency (SBCAD), 3-alpha-hydroxyacyl-CoA dehydrogenase (HADH) deficiency, 3-methylcrotonyl-CoA carboxylase deficiency (3MCC), medium-chain acyl-CoA dehydrogenase (MCAD) deficiency, malonyl-CoA decarboxylase (MCD) deficiency, medium-chain acyl-CoA dehydrogenase (MCAD) deficiency
- mitochondrial respiratory chain defects and others (SUCLA 2) (SUCLG1), ethylmalonic encephalopathy (EE), biotinidase deficiency (BTD), holocarboxylase synthase (HLCS) deficiency, primary coenzyme Q10 deficiency. In addition to their use in the diagnosis and monitoring of IEM, acylcarnitine profiles are a promising group of biomarkers in a number of other metabolic disorders, such as type I and II diabetes, insulin resistance, ketosis (starvation, ketogenic diet), liver dysfunction (cholestasis, NAFLD), renal dysfunction, cardiovascular disease, Alzheimer's disease, some cancers and obesity.

IEM are recognised as rare diseases. In most countries, a disease is considered rare if it affects less than 1 in 2,000 people in the population. However, as noted, the prevalence of rare diseases can vary depending on the specific condition and geographical region, e.g. MCAD is a metabolic disease with an estimated incidence of around 1:6000 to 1:20000 births, while the incidence of CPT I is estimated to be around 1:1000000 births. This shows that the prevalence of rare diseases can be very diverse and that some of these diseases may only affect a very small number of people worldwide.

Numerous methods have been described in the state of the art for testing chemical compounds in the blood of tested patients. For example, the patent document from 2015 [EP3129909B1] which describes testing the biochemical profile of low-molecular-weight compounds for the diagnosis of disease entities and the assessment of the patient's health. Based on the identified abnormal levels, diagnostic information is obtained, including at least one identification of at least one biochemical pathway, associated with an identified subset of small molecules with abnormal levels in the patients' bodies. This enables the diagnosis of a disease or disorder, associated with the identified subset of low-molecular-weight compounds, with abnormal levels and the recommendation of further follow-up testing to precisely identify disease entities.

The prior art also includes a method for newborn dry blood spot screening assisted by acoustic mist ionisation [WO2020201734A1].

A method of newborn screening ('NBS') is described that involves directing ultrasonic energy or ultrasonic waves into a sample from a newborn or infant. This ejects a mist of charged sample droplets or sample ions, which are then analysed using mass spectrometry. Based on the results, it is determined whether one or more analytes and/or metabolites, indicative of a congenital disorder or defect, are present in the sample.

The scientific paper published in 2020 by K. Patel and S. R. Master describes newborn screening for the diagnosis of inborn errors of metabolism [doi:10.1016/b978-0-12-815499-1.00048-x]. Inborn errors of metabolism are a broad category of genetic disorders caused by defects in biochemical pathways important for the metabolism of biomolecules and energy metabolism. The accumulation of toxic energy raw materials and/or the absence of metabolic products is not only responsible for clinical symptoms but also affects rapid clinical diagnosis and the effectiveness of future therapy.

The 2004 patent document [EP1664325B1] describes mass spectrometry methods for the simultaneous detection of metabolic enzyme activity and metabolite levels. The present invention provides a method for detecting a metabolic disorder in a patient, comprising (a) contacting a sample comprising: (i) one or more enzymes whose metabolism is relevant to the study of metabolic disorders, and (ii) one or more metabolic products, with one or more substrates for said one or more enzymes to produce excess metabolic products of the reaction, under conditions in which at least one of said enzymes is capable of acting on the relevant substrate to produce at least one metabolic product; and (b) contacting a metabolic product with a reagent that inhibits the ability of one or more enzymes to act on the relevant substrate, where one or more metabolic analytes and at least one product are soluble in the reagent; to produce a test sample and (c) to determine the presence or amount of said one or more metabolic analytes and at least one product contained in said test sample by mass spectrometry, whereby the presence or amount of said one or more metabolic analytes is determined and said at least one product correlates with the presence or absence of said metabolic disorder.

The joint scientific publication from 2011 [Genet Med 2011 13(3): 230-54 doi: 10.1097/GIM.0b013e31820d5e67] describes a global clinical collaborative project that validated target reference ranges for amino acids and acylcarnitines for metabolic disorders in newborn screening using tandem mass spectrometry. Approximately 25-30 million dried blood spot samples from healthy newborns were analysed. The publication presents results from 130 clinical centres from 45 countries, providing a total of 25,114 percentile scores, of which a total of 565,232 case analysis results were true positives, data current as of 1 December 2010.

In 2014, in the scientific publication by C. Rizzo [Clinica Chimica Acta Volume 429, pages 30-33, https://doi.org/10.1016/j.cca.2013.11.016] concerning on the measurement of succinylcarnitine and methylmalonylcarnitine in a dried blood spot by liquid chromatography-tandem mass spectrometry. Methylmalonic aciduria (MMA) is one of the most common organic acidurias caused by enzymatic defects mainly related to the catabolism of branched-chain amino acids. A liquid chromatography-tandem mass spectrometry (LC-MS/MS) method was developed to quantify two isobaric compounds, succinylcarnitine and methylmalonylcarnitine, in a dried blood spot, to enable differential diagnosis between classical MMA and other congenital defects.

A 2015 review paper by Hye-Ran Yoon, [Ann Pediatr Endocrinol Metab 20(3):119-24. doi: 10.6065/apem.2015.20.3.119] describes newborn screening for metabolic disorders based on targeted metabolomics using tandem mass spectrometry. The main goal of newborn screening is to diagnose genetic, metabolic and other inherited diseases and to initiate treatment before clinical symptoms become apparent. Understanding and tracking biochemical data obtained from tandem mass spectrometry is crucial for early diagnosis of metabolic diseases associated with such disorders. Therefore, it is important to focus on the entire diagnostic process, including differential and confirmatory diagnosis and the main factors influencing the results of biochemical analysis. Compared to normal biochemical tests, it is a complex process carried out by a specialist physician. It consists of an integrated programme that requires a multidisciplinary approach, such as a paediatric metabolic specialist, a laboratory diagnostician and a clinical nutritionist.

Tandem mass spectrometry is a powerful tool for improving newborn screening for a variety of metabolic diseases. It can be used to analyse other treatable disorders or to significantly improve existing neonatal tests to enable accurate and widespread screening. The new era of different screening programmes, new treatments and the availability of detection technology will benefit future generations.

### The problem resulting from by the state of the art

### Limitations in IEM (FIA-MS/MS)

In the state of the art, the FIA-MS/MS method is commonly used for acylcarnitine profile analysis. It is the first-choice method due to the short time of a single analysis (high throughput) and, partly, the relatively low cost resulting from it. Nevertheless, the FIA-MS/MS method is both screening and semi-quantitative. The semi-quantitative determination is based on an estimation of the concentration determined based on the ratios of the signal intensity from the analyte to an isotopic reference standard of known concentration. Due to the lack of chromatographic separation during FIA-MS/MS analysis, there is no separation of analytes from the potentially interfering matrix and between analytes. It does not allow for the separate interpretation of signals from isomeric/isobaric substances. In addition, the effect of the so-called ion suppression is observed, which affects the sensitivity and analytical repeatability of the determinations performed.

Taking the above into account, the most serious disadvantages and limitations of the FIA-MS/MS method include:
1. Limited ability to detect diseases, especially in the case of acylcarnitines at low concentrations. Some of the metabolites of the acylcarnitine profile occur at low concentration levels, which, combined with a relatively high matrix effect, may make their determination or identification difficult or impossible.
2. Lack of ability to differentiate some diseases. In the FIA-MS/MS analysis, signals from different isomers of acylcarnitines with the same molecular formula are summed. As a result, it is impossible or difficult to distinguish diseases for which different isomers are key biomarkers.
3. Limited specificity (ability to discriminate between individuals and phenotypes within an individual). Within one IEM, there are cases of patients with phenotypic differentiation, which also applies to the concentration of biomarkers present in body fluids. In patients with a so-called 'mild phenotype', the FIA-MS/MS method may be insufficient to detect minor abnormalities in metabolite concentrations.
4. Problems with repeatability due to the semi-quantitative nature of the test, which may lead to failure to detect a sick patient and cause the FIA-MS/MS method to have very limited application in monitoring therapy.
5. Low selectivity resulting from the relatively high probability of false positive results caused by the presence of interfering substances (drugs, diet, etc.). Metabolites present in the biological material analysed, originating from pharmacotherapy or diet, may falsely increase the concentrations of key biomarkers of some diseases.
6. In the case of detection and/or monitoring of diseases other than IEM, using the acylcarnitine profile, many of the above problems are multiplied. In addition, the FIA-MS/MS method does not provide the possibility of untargeted analysis to search for new acylcarnitine biomarkers, which may be crucial in the diagnosis of diseases other than IEM.

### Solution to the problem

The subject of the invention is a highly sensitive and highly selective quantitative-qualitative method of analysis by LC-MS, used both for determining the concentrations of acylcarnitines (AC) and for their profiling in biological material. The method uses chromatographic separation on a reversed-phase column of n-butylated derivatives of AC, with detection by mass spectrometry and electrospray ionisation (ESI). The method according to the present invention includes the quantitative determination of 32 acylcarnitines (including their isomers) carried out using the isotope dilution technique, based on a 7-point calibration curve in the test material. At the same time, the method enables qualitative, untargeted detection in the form of semi-quantitative profiling, which detects no less than 81 acylcarnitine isomers in addition to the previous 32. The greatest advantages of the LC-MS method proposed in the invention over the FIA-MS/MS method include:
1. Limiting the matrix effect and improving detection sensitivity, which has a positive impact on the ability to identify and mark AC. This directly translates into the ability of the test to sensitively and specifically detect metabolic disorders, including IEM.
2. Separation of isomers, enabling the differentiation of diseases for which these isomers are diagnostic, key or auxiliary biomarkers. This in turn allows for faster identification and differentiation of metabolic disorders. In the case of IEM, this directly affects the provisional diagnosis with a high degree of probability and earlier implementation of appropriate therapy.
3. Increased sensitivity and partial elimination of the matrix effect, allowing even subtle changes in AC concentrations to be captured. This provides the opportunity to improve disease detection, particularly in patients with a mild phenotype, who often present with mild symptoms or are asymptomatic so far.
4. Improved repeatability of analyses, reducing the number of false negative results and increasing the accuracy of monitoring the acylcarnitine profile in diagnosed patients.

Increased selectivity enables the effective separation of interfering analytes originating from, for example, diet or pharmacotherapy, from pathological metabolites associated with a particular disease entity. This allows for a significant reduction in the occurrence of false positive results, and consequently a reduction in the work and costs associated with confirmatory tests.

The aim of the invention is also to attempt to meet the needs of patients undergoing therapy and use the LC-MS method to monitor diet/pharmacotherapy and the effects of its use. In such a situation, the invention can also help to monitor the health status.

### Glossary and definitions of terms known in the state of the art and used in the patent specification

In this patent specification (both above and below the glossary section), the terms used have the following meanings as described in the definitions below:
The term 'FIA' means Flow Injection Analysis.
The term 'MS' means Mass Spectrometry.
The term 'LC' means Liquid chromatography.
The term `SRM' means Single Reaction Monitoring mode of selected fragmentation reactions.
The term 'NBS' means Newborn Screening Process.
The term 'LOQ' is a medical term for Limit of Quantification.

### SUMMARY OF THE INVENTION

The subject of the present invention is a method for the quantitative and qualitative determination of the acylcarnitine profile in a dried blood spot of children and/or adults, using acylcarnitine standards to perform a standard curve employing liquid chromatography coupled with electrospray ionisation mass spectrometry (LC-MS), comprising the steps wherein:
a) a sample of blotting-dried blood is extracted with a methanolic solution of isotopically labelled standards of known concentrations, after which the extract obtained is evaporated and n-butanol in acidic medium is added to the dry residue, and the solution thus prepared is evaporated again and the resulting dry residue is dissolved in a 0.1% solution of formic acid in water;
b) the mixture obtained in step (a) is analysed by liquid chromatography-mass spectrometry (LC-MS), the liquid chromatography being performed with a reversed-phase column, the mobile phase being a solution of formic acid in water and a solution of formic acid in acetonitrile (ACN);
c) measurement of acylcarnitines, preferably at least 32 acylcarnitines and not less than 81 acylcarnitine isomers in a dried blood spot, is carried out based on LC-MS chromatograms and using an isotopic dilution technique based on at least a 7-point calibration curve for detecting the acylcarnitine profile previously performed based on acylcarnitine standards.

Preferably, the first mobile phase is a 0.1% solution of formic acid in ultrapure water and the second mobile phase is a 0.1% solution of formic acid in acetonitrile (ACN).

Preferably, the following are used to make the calibration curve: a) Control Acylcarnitines in Serum, Level 1 + 2, b) Lauroyl-L-carnitine, c) Myristoyl-L-carnitine, d) 2-trans,4-cis-Decadienoyl-L-carnitine, e) Adipoyl-L-carnitine.

Preferably, an internal standard, preferably ClinMass^{®} Internal Standard for Amino Acids and Acylcarnitines, is used for quantitative analysis, wherein one of the ampoules contains a mixture of isotopic standards of acylcarnitines, the other ampoule contains internal standards of amino acids.

Preferably, the reversed-phase chromatographic column is purified with the washing solutions: a) a mixture of methanol and iso-propanol and b) a mixture of water and methanol.

The subject of the present invention is also the use of quantitative and qualitative determination of acylcarnitine profile in a dried blood spot of children and/or adults using liquid chromatography and mass spectrometry (LC-MS) to aid in the detection of diseases associated with metabolic disorders, wherein the liquid chromatography is performed using a reversed-phase column, the mobile phase being a solution of formic acid in water and a solution of formic acid in acetonitrile (ACN), and calibration curves for detection of the acylcarnitine profile are performed based on acylcarnitine standards.

Preferably, the first mobile phase is a 0.1% solution of formic acid in ultrapure water and the second mobile phase is a 0.1% solution of formic acid in acetonitrile (ACN).

Preferably, commercially available: a) Control Acylcarnitines in Serum, Level 1 + 2, b) Lauroyl-L-carnitine, c) Myristoyl-L-carnitine, d) 2-trans,4-cis-Decadienoyl-L-carnitine, e) Adipoyl-L-carnitine are used to make the calibration curve.

Preferably, an internal standard, preferably ClinMass^{®} Internal Standard for Amino Acids and Acylcarnitines, is used for the quantitative analysis, wherein one of the ampoules contains a mixture of isotopic standards of acylcarnitines, the other ampoule contains internal standards of amino acids.

Preferably, the reversed-phase chromatography column is purified using rinsing solutions of: a) a mixture of methanol with iso-propanol and b) a mixture of water and methanol.

Preferably, for the detection of at least one of the metabolic disorders resulting from inborn errors of metabolism as determined by diagnostic analysis selected from: CUD (carnitine uptake deficiency), CPT I (carnitine palmitoyltransferase I deficiency), PA (propionic acidemia (propionyl-CoA decarboxylase deficiency), MMA mut. 0 (methylmalonic acidemia due to methylmalonyl-CoA mutase (MCM) deficiency), other MMA disorders (cobalamin defects), SCS (succinyl-CoA synthetase-related defects: SUCLA2, SUCLG1), SCAD (short-chain acyl-CoA dehydrogenase), EE (ethylmalonic encephalopathy), IBD (isobutyryl-CoA dehydrogenase deficiency), IVA (isovaleric acidemia due to isovaleryl-CoA dehydrogenase (IVD) deficiency), SBCAD (short/branched-chain acyl-CoA dehydrogenase deficiency), HADH (3-hydroxyacyl-CoA dehydrogenase deficiency (formerly SCHAD - short-chain 3-hydroxyacyl-CoA dehydrogenase deficiency), HIBCH (3-hydroxyisobutyryl-CoA hydrolase deficiency), 3MCC (3-methylcrotonyl-CoA carboxylase deficiency), HMG (HMG-CoA lyase deficiency), BTD / HCS (biotinidase deficiency / holocarboxylase synthetase deficiency), MGA (3-methylglutaconyl-CoA hydratase deficiency), BKT (beta-ketothiolase deficiency), MHBD (2-methyl-3-hydroxybutyryl-CoA dehydrogenase deficiency), MCAD (medium-chain acyl-CoA dehydrogenase deficiency), MCD (malonyl-CoA decarboxylase deficiency), GA I (glutaric acidemia I due to glutaryl-CoA dehydrogenase deficiency), DECRD (dienoyl-CoA reductase deficiency caused by mitochondrial NAD kinase 2 deficienc), VLCAD (very long-chain acyl-CoA dehydrogenase deficiency), CPT II / CACT (carnitine palmitoyltransferase II / carnitine-acylcarnitine translocase deficiency), LCHAD (long chain 3-hydroxyacyl-CoA dehydrogenase / trifunctional protein deficiency), MAD (multiple acyl-CoA dehydrogenase deficiency (glutaric acidemia type II), untreated CoQD (primary Coenzyme Q deficiency - untreated), as well as other (besides those mentioned) genetically determined mitochondrial dysfunctions (3-methylglutaconic aciduria, TANGO2).

Preferably, for the detection of at least one of the metabolic disorders resulting from inborn errors of metabolism as determined by differential diagnosis selected from: PA - MMA (propionic acidemia (propionyl-CoA decarboxylase deficiency, and methylmalonic acidemia due to methylmalonyl-CoA mutase (MCM) deficiency), 3MCC - BKT (3-methylcrotonyl-CoA carboxylase deficiency, and beta-ketothiolase deficiency), and also IVA - SBCAD (isovaleric acidemia due to isovaleryl-CoA dehydrogenase (IVD) deficiency and short/branched-chain acyl-CoA dehydrogenase deficiency).

Preferably, for the detection of diseases associated with autoimmune metabolic disorders selected from: type I diabetes, type II diabetes, and/or insulin resistance.

Preferably, for the detection of at least one of the metabolic disorders resulting from diet (nutrition) and/or treatment: ketosis (starvation, ketogenic diet), MCT (medium-chain triglycerides supplementation), chronic obesity, epilepsy treatment (valproates), antibiotic therapy (pivampicillin).

Preferably, for the detection of at least one metabolic disorder selected from: liver dysfunction (cholestasis, NAFLD), renal dysfunction, cardiovascular disease, Alzheimer's disease, or selected neoplastic diseases.

### EXAMPLES

### EXAMPLE 1

### Qualitative and quantitative determination of acylcarnitines profile in a dried blood spot by LC-MS/MS

### Principle of the method

The method according to the present invention consists in the determination of acylcarnitines (AC) concentrations and their profiling in biological samples by means of LC-MS/MS technique employing the isotope dilution method.

The procedure of the Diagnostic Laboratory of Masdiag.

### Sample Preparation

Sample preparation for testing varies according to the biological material used. Biological materials in which the acylcarnitine profile can be analysed are: blotted and dried capillary blood (DBS, dried blood spot) and/or serum/plasma.

### Preparation of the DBS sample

A 3.2 mm diameter disc is cut from the central part of the blotted dried blood spot. In the first step of sample preparation, the biological material under investigation is extracted with a methanolic solution of isotopically labelled standards of known concentrations. The resulting extract is then evaporated and n-butanol in acidic medium (HCl, 3N) is added to the dry residue to perform derivatisation (25 min, 60°C). The solution thus prepared is evaporated again, and the resulting dry residue is reconstituted in 0.1% formic acid solution in water and subjected to LC-MS/MS analysis.

### Serum sample preparation

In the first step of serum sample preparation, a methanolic solution of isotopically labelled standards is added to 50 µl of serum, followed by acetonitrile to precipitate the proteins. The resulting solution is evaporated and n-butanol in an acidic medium (HCl, 3N) is added to the dry residue for derivatisation (25 min at 60°C). The solution thus prepared is subjected to evaporation again, and the resulting dry residue is reconstituted in a 0.1% solution of formic acid in water, to be then analysed by LC-MS/MS.

### Calibration curve preparation

For both serum and DBS samples, calibration curves are prepared for 32 quantitatively determined analytes at seven concentration levels in the same biological material (dried blood spot/serum/plasma) identical to the sample. Calibration curves are obtained by dilution of commercially available certified materials.

In the case of serum used as biological material, the prepared calibration points are directly subjected to the standard sample preparation procedure. In the case of DBS samples as biological material, the prepared calibration points are mixed with red cell concentrate (RCC) in a 1:1 (v:v) ratio. RCC concentrate is obtained by collecting venous blood in an anticoagulant test tube (K3EDTA). The blood sample is then centrifuged to separate the plasma from the red cells. The red cells thus obtained are washed at least three times with physiological saline until the solution above the cells is colourless, each time centrifuging and discarding the solution above the cells.

The range of the calibration curves is selected based on the concentrations of individual ACs in particular types of biological samples.

### LC-MS/MS analysis

The method according to the present invention uses a liquid chromatograph consisting of two high pressure pumps (LC-30AD, Shimadzu), a degasser (DGU-20A5, Shimadzu), a column thermostat (Jones Chromatography) and an autosampler (HTC PAL, CTC Analytics). A Halo^{®} C30 chromatographic column with dimensions of 100 mm x 2.1 mm and a grain size of 2.7 µm (Advanced Materials Technology), maintained at a temperature of 40°C, is used for the chromatographic separation of the compounds analysed. The method uses a gradient elution (Table 1) using 0.1% formic acid in water as phase A and 0.1% formic acid in acetonitrile as phase B. Samples are thermostated at a temperature of 6-8°C prior to analysis. The injection volume is 20 µl.

**Table 1. Gradient elution conditions used in the analysis.**

| **Time (min)** | **Phase A content (%)** | **Phase B content (%)** |
|---|---|---|
| 0.1 | 90 | 10 |
| 14 | 11 | 89 |
| 14.1 | 0 | 100 |
| 16 | 0 | 100 |
| 16.1 | 90 | 10 |

A mass spectrometric technique is used for detection, using a triple quadrupole tandem mass spectrometer with electrospray (ESI) as an ion source (4000 QTRAP, AB SCIEX). The following operating conditions of the ion source are used in the presented method:

**Table 2. Ion source operating conditions**

| | |
|---|---|
| Ion Source Gas (GS1) | 50 psi |
| Drying gas (GS2) | 50 psi |
| Curtain Gas (CUR) | 35 psi |
| lonSpray Voltage (IS) | 5500 V, positive ion mode |
| Ion Source Temperature (TEM) | 550°C |

The total analysis time is 18 minutes. The presented LC-MS/MS method uses the Selected Reaction Monitoring (SRM) mode for both quantitative determination and qualitative profiling. Optimal SRM conditions were determined for each of the analysed compounds (Table).

**Table 3. SRM pair parameters for the tested compounds and internal standards (IS) and their retention times**

| **Compound** | **Q1 [m/z]** | **Q3 [m/z]** | **RT [min]** | **DP [v]** | **CE [v]** |
|---|---|---|---|---|---|
| C0 | 218.2 | 85.1 | 1.40 | 60 | 55 |
| IS C0 | 227.2 | 85.1 | 1.40 | 60 | 55 |
| c2_a | 260.2 | 85.1 | 2.35 | 60 | 65 |
| IS C2_a | 263.2 | 85.1 | 2.35 | 60 | 65 |
| c2_b | 260.2 | 85.101 | 4.40 | 60 | 65 |
| C3 | 274.2 | 85.1 | 3.20 | 60 | 55 |
| IS C3 | 277.2 | 85.1 | 3.20 | 60 | 55 |
| C3DC | 360.3 | 85.1 | 5.40 | 60 | 30 |
| C4 | 288.2 | 85.1 | 3.95 | 60 | 33 |
| IS C4 | 291.2 | 85.1 | 4.00 | 60 | 33 |
| C4-OH | 304.2 | 85.1 | 2.50 | 50 | 33 |
| C4DC | 374.3 | 85.1 | 5.70 | 50 | 35 |
| C5:1 | 300.2 | 85.1 | 4.40 | 60 | 36 |
| C5 | 302.2 | 85.1 | 4.77 | 70 | 36 |
| IS C5 | 311.2 | 85.1 | 4.80 | 70 | 36 |
| C5-OH | 318.3 | 85.1 | 2.95 | 50 | 36 |
| C5DC_a | 388.3 | 85.1 | 5.90 | 50 | 35 |
| C5DC_b | 388.3 | 85.11 | 6.70 | 50 | 35 |
| C6 | 316.3 | 85.1 | 5.70 | 60 | 40 |
| C6DC | 402.3 | 85.1 | 6.35 | 50 | 35 |
| C8:1 | 342.3 | 85.1 | 6.40 | 70 | 40 |
| C8 | 344.3 | 85.1 | 7.00 | 90 | 40 |
| IS C8 | 347.3 | 85.1 | 7.00 | 90 | 40 |
| C8DC | 430.3 | 85.1 | 7.25 | 50 | 40 |
| C10:2 | 368.3 | 85.1 | 7.40 | 90 | 40 |
| C10:1 | 370.3 | 85.1 | 7.70 | 90 | 40 |
| C10 | 372.3 | 85.1 | 8.22 | 90 | 40 |
| C12:1 | 398.3 | 85.1 | 8.95 | 90 | 50 |
| C12 | 400.3 | 85.1 | 9.70 | 90 | 50 |
| C12-OH | 416.3 | 85.1 | 8.00 | 50 | 50 |
| C14:2 | 424.3 | 85.1 | 9.35 | 50 | 60 |
| C14:1 | 426.4 | 85.1 | 10.00 | 50 | 60 |
| C14 | 428.4 | 85.1 | 10.65 | 90 | 60 |
| IS C14 | 431.4 | 85.1 | 10.65 | 100 | 60 |
| C14:1-OH | 442.4 | 85.1 | 8.80 | 100 | 60 |
| C14-OH_a | 444.4 | 85.1 | 7.70 | 100 | 60 |
| C14-OH_b | 444.4 | 85.101 | 9.40 | 100 | 60 |
| C16 | 456.4 | 85.1 | 11.80 | 100 | 90 |
| IS C16 | 459.4 | 85.1 | 11.80 | 100 | 90 |
| C16:1 | 454.4 | 85.1 | 10.85 | 100 | 60 |
| C16:1-OH | 470.4 | 85.1 | 12.30 | 90 | 60 |
| C16-OH | 472.4 | 85.1 | 10.40 | 100 | 60 |
| C18:2 | 480.4 | 85.1 | 11.20 | 70 | 60 |
| C18:1 | 482.4 | 85.1 | 11.95 | 70 | 90 |
| C18:2-OH | 496.4 | 85.1 | 10.70 | 140 | 60 |
| C18:1-OH | 498.4 | 85.1 | 10.60 | 120 | 60 |
| C18-OH | 500.4 | 85.1 | 11.55 | 90 | 60 |
| C18 | 484.4 | 85.101 | 12.90 | 60 | 90 |
| IS C5DC D9 | 397.3 | 85.1 | 5.90 | 50 | 35 |
| IS C6 D3 | 319.3 | 85.1 | 5.70 | 60 | 40 |
| IS C10 D3 | 375.3 | 85.1 | 8.22 | 90 | 40 |
| IS C12 D3 | 403.3 | 85.1 | 9.70 | 90 | 50 |
| IS C18 D3 | 487.4 | 85.101 | 12.90 | 60 | 90 |
| C17 | 470.3 | 85.1 | 12.20 | 60 | 90 |
| C19 | 498.3 | 85.1 | 13.40 | 60 | 90 |

### EXAMPLE 2

Use of the analytical method presented in Example 1 in the diagnosis and monitoring of metabolic disorders. The method is a biochemical test with several advantages over both screening diagnostics (FIA-MS/MS) and genetic tests. Compared to traditional screening diagnostics, the method according to the present invention is characterised by higher selectivity, sensitivity and specificity (less susceptibility to interference). At the same time, it offers lower costs and higher throughput than genetic methods. The following examples demonstrate the potential and **proven** usefulness of the method according to the invention in the diagnosis and monitoring of metabolic disorders.

### IEM

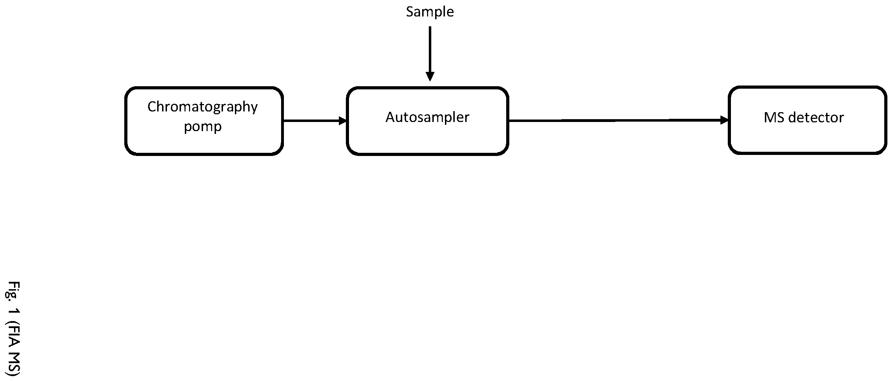

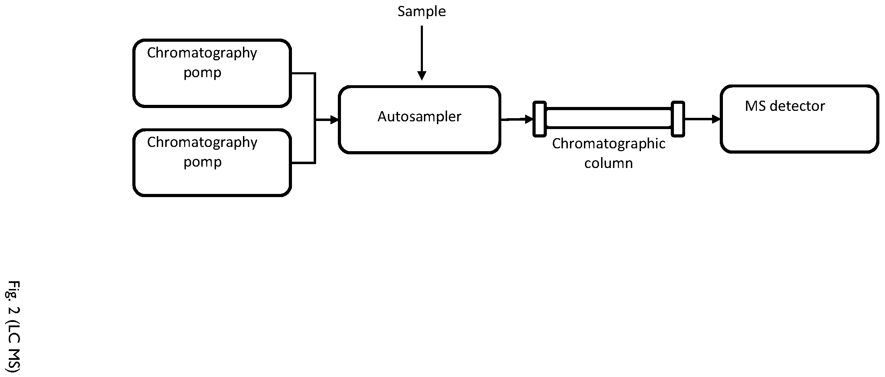

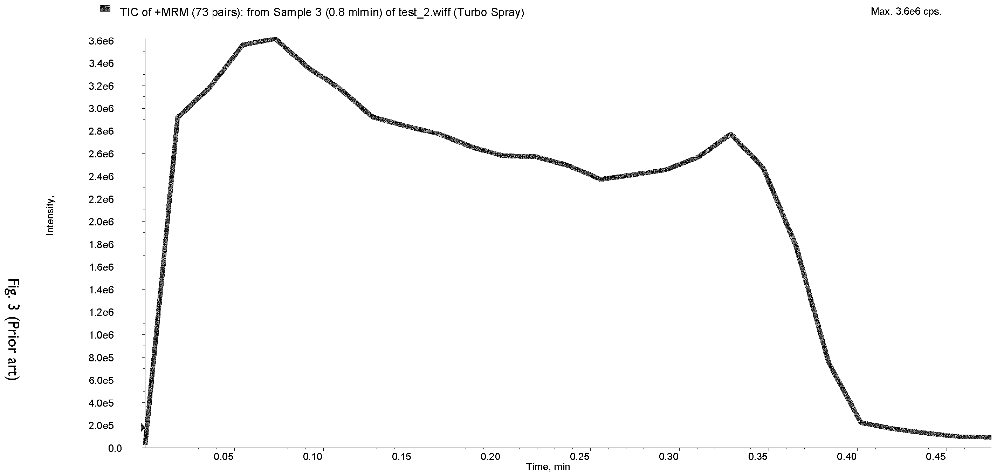

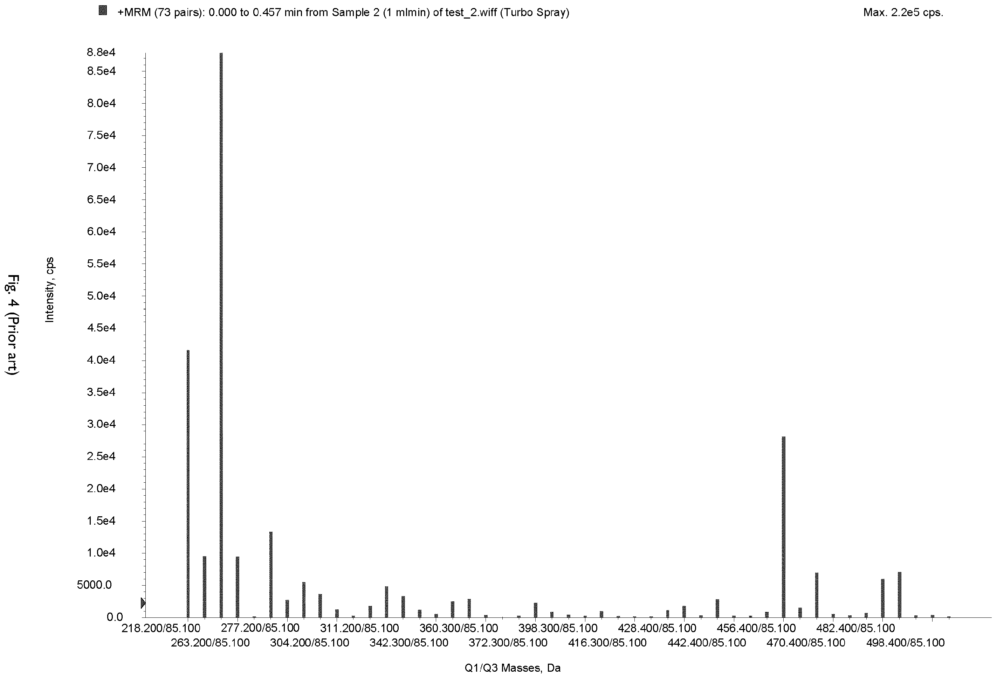

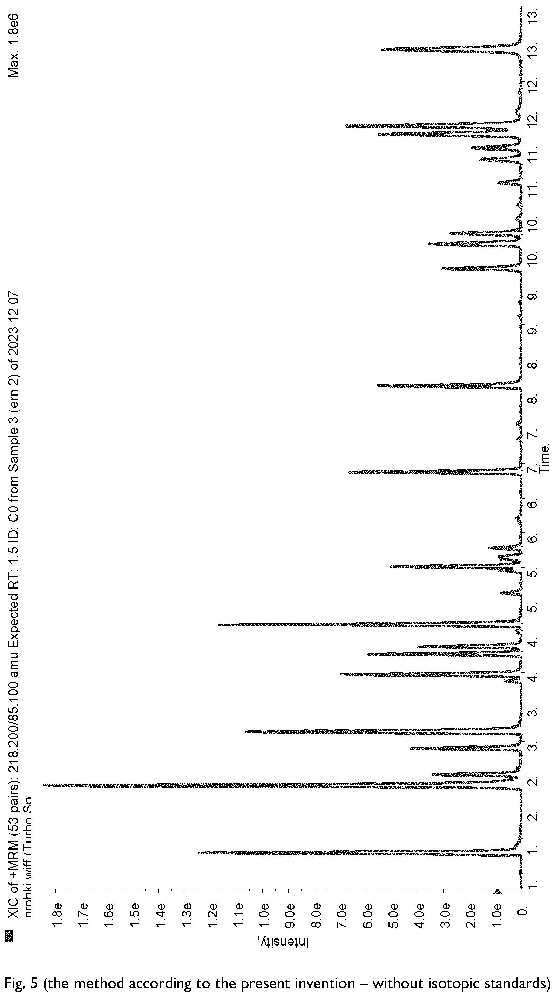

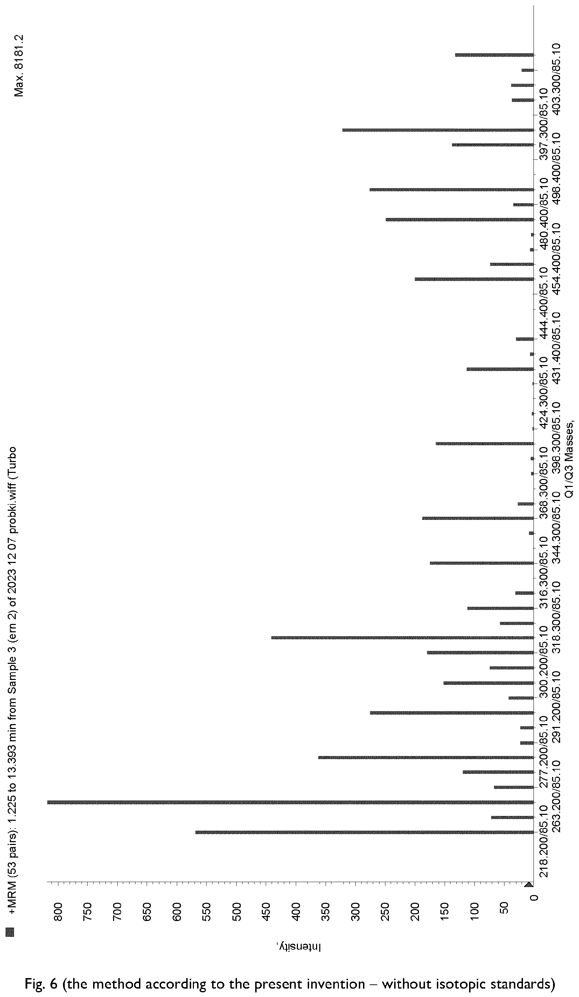

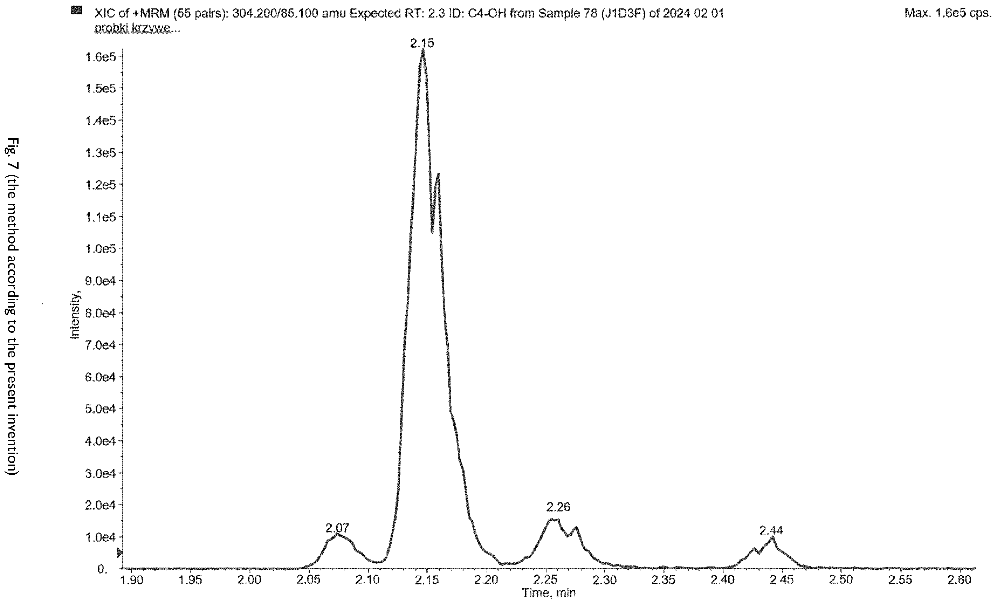

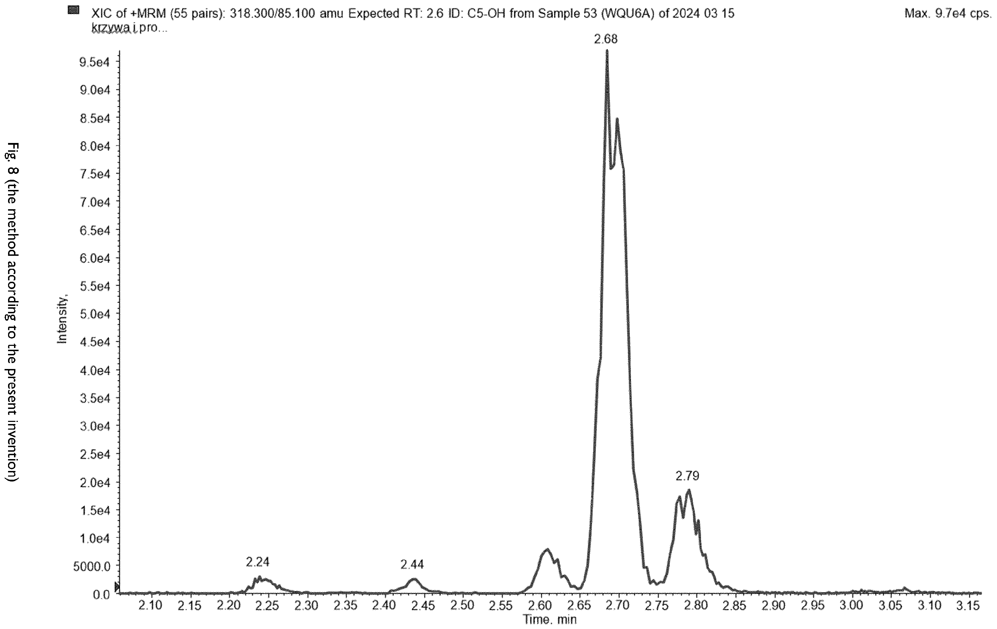

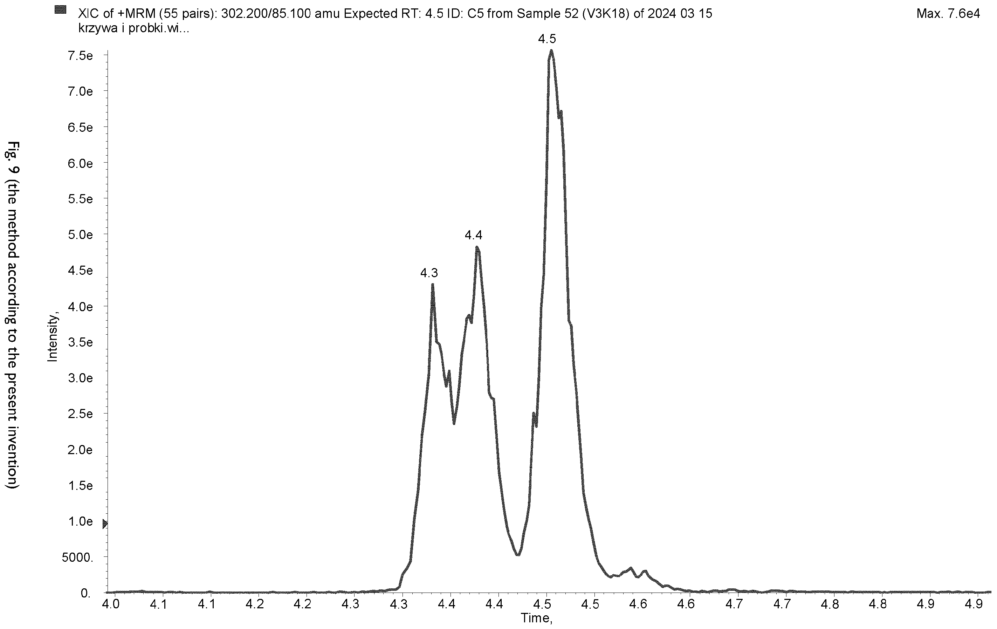

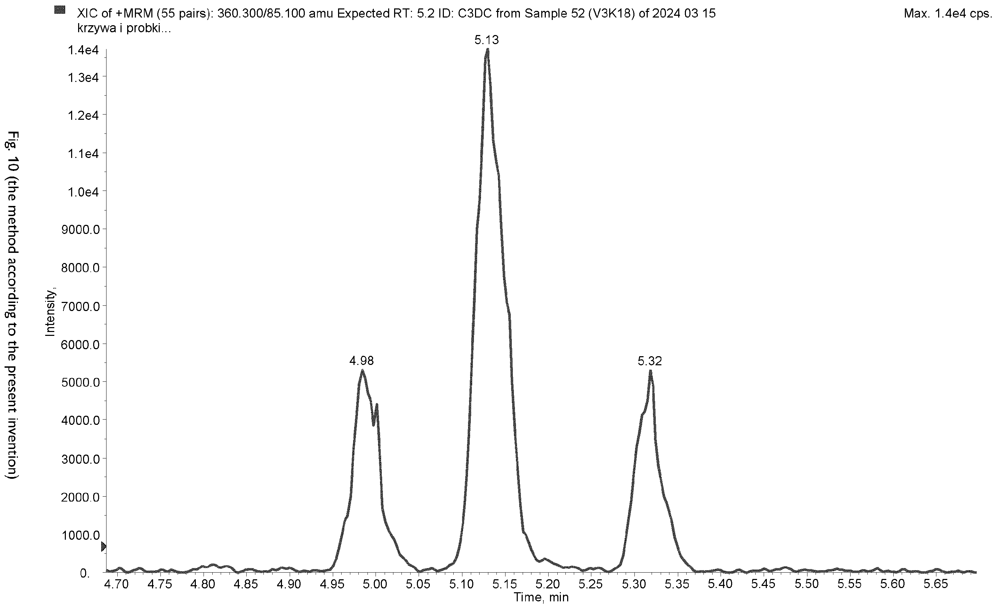

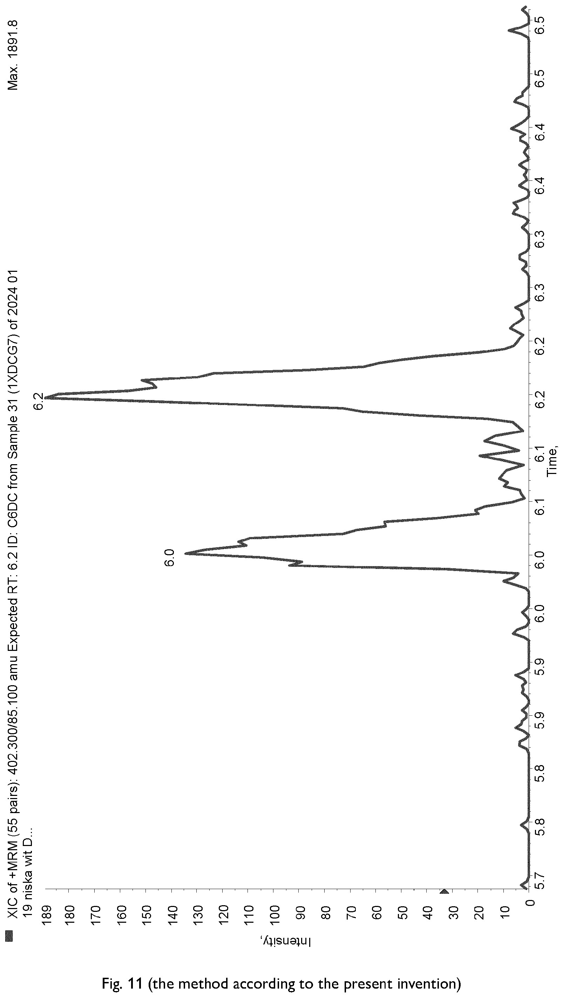

CUD (carnitine uptake deficiency), **CPT I (carnitine palmitoyltransferase I deficiency), PA (propionic aciduria (propionyl-CoA decarboxylase deficiency), MMA mut. 0 (methylmalonic aciduria due to methylmalonyl-CoA mutase (MCM) deficiency),** other MMA disorders (cobalamin defects), SCS (succinyl-CoA synthetase-related defects: SUCLA2, SUCLG1), SCAD (short-chain acyl-CoA dehydrogenase), EE (ethylmalonic encephalopathy), IBD (isobutyryl-CoA dehydrogenase deficiency), **IVA (isovaleric aciduria due to isovaleryl-CoA dehydrogenase (IVD) deficiency)** - LC-MS results see Fig. 9; SBCAD (short/branched-chain acyl-CoA dehydrogenase deficiency), HADH (3-hydroxyacyl-CoA dehydrogenase deficiency (formerly SCHAD - short-chain 3-hydroxyacyl-CoA dehydrogenase deficiency), **HIBCH (3-hydroxyisobutyryl-CoA hydrolase deficiency)** - LC-MS results see Fig. 7; **3MCC (3-methylcrotonyl-CoA carboxylase deficiency)** LC-MS results see Fig. 8; **HMG (HMG-CoA lyase deficiency)** - LC-MS results see Fig. 11; **untreated BTDZ HCS (biotinidase deficiency** / **holocarboxylase synthetase deficiency),** MGA (3-methylglutaconyl-CoA hydratase deficiency), **BKT (beta-ketothiolase deficiency)** - LC-MS results see Fig. 8; MHBD (2-methyl-3-hydroxybutyryl-CoA dehydrogenase deficiency), **MCAD (medium-chain acyl-CoA dehydrogenase deficiency)** - LC-MS results see Fig. 10; MCD (malonyl-CoA decarboxylase deficiency), **GA I (glutaric aciduria I due to glutaryl-CoA dehydrogenase deficiency),** DECRD (dienoyl-CoA reductase deficiency caused by mitochondrial NAD kinase 2 deficiency), **VLCAD (very long-chain acyl-CoA dehydrogenase deficiency), CPT II** / **CACT (carnitine palmitoyltransferase II** / **carnitine-acylcarnitine translocase deficiency), LCHAD (long chain 3-hydroxyacyl-CoA dehydrogenase** / **trifunctional protein deficiency),** MAD (multiple acyl-CoA dehydrogenase deficiency (glutaric aciduria type II), **untreated CoQD (primary Coenzyme Q deficiency** - **untreated),** and other (apart from those mentioned) genetically determined mitochondrial dysfunctions and other (apart from the above) genetically determined mitochondrial dysfunctions **(3-methylglutaconic aciduria,** TANGO2). In addition, as part of the study, differential diagnosis of the following IEM was conducted, confirmed by other methods (biochemical and/or genetic):
PA - MMA (propionic aciduria (propionyl-CoA decarboxylase deficiency, and methylmalonic aciduria due to methylmalonyl-CoA mutase (MCM) deficiency) - LC-MS results see Fig. 8; 3MCC - BKT (3-methylcrotonyl-CoA carboxylase deficiency, and beta-ketothiolase deficiency) - LC-MS results see Fig. 9; and also IVA - SBCAD (isovaleric aciduria due to isovaleryl-CoA dehydrogenase (IVD) deficiency, and short/branched-chain acyl-CoA dehydrogenase deficiency).

### Other diseases of metabolic disorders

In addition, the study included diagnosis confirmed by other methods for at least one of the following autoimmune metabolic disorders: type I diabetes, type II diabetes, and/or insulin resistance.

In addition, the study included diagnosis diagnostics confirmed by other methods for at least one of the following nutritional and/or treatment-related metabolic disorders: ketosis (starvation, ketogenic diet), MCT (medium-chain triglyceride supplementation), chronic obesity, epilepsy treatment (valproate therapy), antibiotic therapy (pivampicillin).

In addition, the study included diagnosis confirmed by other methods for at least one of the following metabolic disorders: liver dysfunction (cholestasis, NAFLD), renal dysfunction, cardiovascular disease, Alzheimer's disease, or selected neoplastic diseases.

### SUMMARY

The present invention finds application in a wide range of medical diagnostics due to its numerous advantages over methods widely used in the prior art.
1 The method according to the invention enables the separation and identification of acylcarnitine isomers, i.e. qualitative and quantitative examination. The use of the LC-MS procedure enables the separation of isomers, which are characteristic of various metabolic disorders. In FIA-MS/MS, without the separation of isomers, which are biomarkers of rare diseases, it is not possible to distinguish some of these diseases.
2. Acylcarnitine isomers show diagnostic potential, leading to a continuous search for samples to identify new disease markers. Therefore, all isomers are being separated in order to develop an effective diagnostic tool. At the current stage of research, some of the separated isomers have been found to be characteristic of specific disease entities.
3 By using LC-MS and a reversed-phase column, the matrix effect is significantly reduced, so that some compounds that are invisible in FIA-MS/MS analysis, become visible in the method according to the invention, thus facilitating differential diagnosis.
4 By using a chromatographic column in LC-MS, the sensitivity of the method is increased, making it possible to detect diseases in individuals, whose excreted amounts of diagnostic metabolites are relatively lower ('mild excretor phenotype').
5. The method according to the invention makes it possible to observe small changes in acylcarnitine concentrations in the blood, which allows for more accurate monitoring of the therapy of people suffering from certain inborn errors of metabolism.
6. The use of LC-MS/MS reduces the number of false positive results, significantly reducing the percentage of patients referred for repeat/additional testing. This contributes to reduced stress for patients and their caregivers, reduced medical diagnostic costs and reduced burden on diagnostic laboratories.
7. The present invention will not replace FIA-MS/MS for the time being, as the analysis time according to the invention is longer, however this method can be used as a second-tier verification test to narrow down the search for genes in which a mutation responsible for the disease in question is possible. Targeted genetic testing is cheaper and faster than testing the entire gene pool.
8. In the near future, the invention may constitute the basis for the development of age-dependent reference ranges. Reference ranges of acylcarnitine concentrations in dried blood spot determined by LC-MS/MS have not yet been established for the Polish population.

## Claims

1. A method for the quantitative and qualitative determination of the acylcarnitine profile in a dried blood spot of children and/or adults, using acylcarnitine standards, to perform a standard curve employing liquid chromatography coupled with electrospray ionisation mass spectrometry (LC-MS), comprising the steps wherein:
a) a sample of blotting-dried blood is extracted with a methanolic solution of isotopically labelled standards of known concentrations, after which the extract obtained is evaporated and n-butanol in acidic medium is added to the dry residue, and the solution thus prepared is evaporated again and the resulting dry residue is dissolved in a 0.1% solution of formic acid in water;
b) the mixture obtained in step (a) is analysed by liquid chromatography-mass spectrometry (LC-MS), the liquid chromatography being performed with a reversed-phase column, the mobile phase being a solution of formic acid in water and a solution of formic acid in acetonitrile (ACN);
c) measurement of acylcarnitines, preferably at least 32 acylcarnitines and not less than 81 acylcarnitine isomers in a dried blood spot, is carried out based on LC-MS chromatograms and using an isotopic dilution technique based on at least a 7-point calibration curve for detecting the acylcarnitine profile previously performed based on acylcarnitine standards.

2. The method according to claim 1, wherein the first mobile phase is a 0.1% solution of formic acid in ultrapure water and the second mobile phase is a 0.1% solution of formic acid in acetonitrile (ACN).

3. The method according to any one of the preceding claims, wherein the following are used to make the calibration curve: a) Control Acylcarnitines in Serum, Level 1 + 2, b) Lauroyl-L-carnitine, c) Myristoyl-L-carnitine, d) 2-trans,4-cis-Decadienoyl-L-carnitine, e) Adipoyl-L-carnitine.

4. The method according to any one of the preceding claims, wherein an internal standard, preferably ClinMass^{®} Internal Standard for Amino Acids and Acylcarnitines, is used for quantitative analysis, wherein one of the ampoules contains a mixture of isotopic standards of acylcarnitines, the other ampoule contains internal standards of amino acids.

5. The method according to any one of the preceding claims, wherein the reversed-phase chromatographic column is purified with the washing solutions: a) a mixture of methanol and iso-propanol and b) a mixture of water and methanol.

6. Use of quantitative and qualitative determination of acylcarnitine profile in a dried blood spot of children and/or adults using liquid chromatography and mass spectrometry (LC-MS) to aid in the detection of diseases associated with metabolic disorders, wherein the liquid chromatography is performed using a reversed-phase column, the mobile phase being a solution of formic acid in water and a solution of formic acid in acetonitrile (ACN), and calibration curves for detection of the acylcarnitine profile are performed based on acylcarnitine standards.

7. The use according to claim 6, wherein the first mobile phase is a 0.1% solution of formic acid in ultrapure water and the second mobile phase is a 0.1% solution of formic acid in acetonitrile (ACN).

8. The use according to any one of the preceding claims, wherein commercially available: a) Control Acylcarnitines in Serum, Level 1 + 2, b) Lauroyl-L-carnitine, c) Myristoyl-L-carnitine, d) 2-trans,4-cis-Decadienoyl-L-carnitine, e) Adipoyl-L-carnitine are used to make the calibration curve.

9. The use according to any one of the preceding claims, wherein an internal standard, preferably ClinMass^{®} Internal Standard for Amino Acids and Acylcarnitines, is used for the quantitative analysis, wherein one of the ampoules contains a mixture of isotopic standards of acylcarnitines, the other ampoule contains internal standards of amino acids.

10. The use according to any one of the preceding claims, wherein the reversed-phase chromatography column is purified using rinsing solutions of: a) a mixture of methanol with iso-propanol and b) a mixture of water and methanol.

11. The use according to any one of the preceding claims for the detection of at least one of the metabolic disorders resulting from inborn errors of metabolism as determined by diagnostic analysis selected from: CUD (carnitine uptake deficiency), CPT I (carnitine palmitoyltransferase I deficiency), PA (propionic acidemia (propionyl-CoA decarboxylase deficiency), MMA mut. 0 (methylmalonic acidemia due to methylmalonyl-CoA mutase (MCM) deficiency), other MMA disorders (cobalamin defects), SCS (succinyl-CoA synthetase-related defects: SUCLA2, SUCLG1), SCAD (short-chain acyl-CoA dehydrogenase), EE (ethylmalonic encephalopathy), IBD (isobutyryl-CoA dehydrogenase deficiency), IVA (isovaleric acidemia due to isovaleryl-CoA dehydrogenase (IVD) deficiency), SBCAD (short/branched-chain acyl-CoA dehydrogenase deficiency), HADH (3-hydroxyacyl-CoA dehydrogenase deficiency (formerly SCHAD - short-chain 3-hydroxyacyl-CoA dehydrogenase deficiency), HIBCH (3-hydroxyisobutyryl-CoA hydrolase deficiency), 3MCC (3-methylcrotonyl-CoA carboxylase deficiency), HMG (HMG-CoA lyase deficiency), BTD / HCS (biotinidase deficiency / holocarboxylase synthetase deficiency), MGA (3-methylglutaconyl-CoA hydratase deficiency), BKT (beta-ketothiolase deficiency), MHBD (2-methyl-3-hydroxybutyryl-CoA dehydrogenase deficiency), MCAD (medium-chain acyl-CoA dehydrogenase deficiency), MCD (malonyl-CoA decarboxylase deficiency), GA I (glutaric acidemia I due to glutaryl-CoA dehydrogenase deficiency), DECRD (dienoyl-CoA reductase deficiency caused by mitochondrial NAD kinase 2 deficienc), VLCAD (very long-chain acyl-CoA dehydrogenase deficiency), CPT II / CACT (carnitine palmitoyltransferase II / carnitine-acylcarnitine translocase deficiency), LCHAD (long chain 3-hydroxyacyl-CoA dehydrogenase / trifunctional protein deficiency), MAD (multiple acyl-CoA dehydrogenase deficiency (glutaric acidemia type II), untreated CoQD (primary Coenzyme Q deficiency - untreated), as well as other (besides those mentioned) genetically determined mitochondrial dysfunctions (3-methylglutaconic aciduria, TANGO2).

12. The use according to any one of the preceding claims for the detection of at least one of the metabolic disorders resulting from inborn errors of metabolism as determined by differential diagnosis selected from: PA - MMA (propionic acidemia (propionyl-CoA decarboxylase deficiency, and methylmalonic acidemia due to methylmalonyl-CoA mutase (MCM) deficiency), 3MCC - BKT (3-methylcrotonyl-CoA carboxylase deficiency, and beta-ketothiolase deficiency), and also IVA - SBCAD (isovaleric acidemia due to isovaleryl-CoA dehydrogenase (IVD) deficiency and short/branched-chain acyl-CoA dehydrogenase deficiency).

13. Use according to any one of the preceding claims for the detection of diseases associated with autoimmune metabolic disorders selected from: type I diabetes, type II diabetes, and/or insulin resistance.

14. Use according to any one of the preceding claims for the detection of at least one of the metabolic disorders resulting from diet (nutrition) and/or treatment: ketosis (starvation, ketogenic diet), MCT (medium-chain triglycerides supplementation), chronic obesity, epilepsy treatment (valproates), antibiotic therapy (pivampicillin).

15. The use according to any one of the preceding claims for the detection of at least one metabolic disorder selected from: liver dysfunction (cholestasis, NAFLD), renal dysfunction, cardiovascular disease, Alzheimer's disease, or selected neoplastic diseases.
